# NEUE EUROPÄISCHE PATENTSCHRIFT

(11) **EP 1 824 901 B2**
(45) Veröffentlichungstag und Bekanntmachung des Hinweises auf die Entscheidung über den Einspruch: **07.08.2013**
(45) Hinweis auf die Patenterteilung: 05.11.2008
(21) Anmeldenummer: 05811995.9
(22) Anmeldetag: 25.11.2005
(51) Int. Cl.: C08G 65/26

(54) **VERFAHREN ZUR HERSTELLUNG VON REINEN ALPHA-ALKOXY-OMEGA-HYDROXY-POLYALKYLENGLYKOLEN**
METHOD FOR PRODUCING PURE ALPHA-ALKOXY-OMEGA-HYDROXY-POLYALKYLENE GLYCOLS
PROCEDE DE PRODUCTION D'ALPHA-ALCOXY-OMEGA-HYDROXY-POLYALKYLENEGLYCOLS

(30) Priorität: 10.12.2004 DE 102004059489
(43) Veröffentlichungstag der Anmeldung: 29.08.2007
(73) Patentinhaber: Clariant Produkte (Deutschland) GmbH, 65929 Frankfurt am Main (DE)
(72) Erfinder: PÖLLMANN, Klaus, 84489 Burghausen (DE); STRASSER, Anton, 84503 Altötting (DE); VYBIRAL, Reinhard, 84508 Burgkirchen (DE); WAGNER, Rainer, 84508 Burgkirchen (DE)
(74) Vertreter: Mikulecky, Klaus
(86) Internationale Anmeldenummer: PCT/EP2005/012622
(87) Internationale Veröffentlichungsnummer: WO 2006/061110

(56) Entgegenhaltungen:
- EP-A- 0 884 290
- EP-A- 1 295 902
- WO-A1-2006//036825
- DATABASE WPI Section Ch, Week 199440 Derwent Publications Ltd., London, GB; Class A25, AN 1994-322254 XP002375424 & JP 06 248070 A (KAO CORP) 6. September 1994 (1994-09-06)

## Beschreibung

Die vorliegende Erfindung betrifft ein Verfahren zur Herstellung von hochmolekularen α-Alkoxy-Ω-hydroxy-Polyalkylenglykolen, durch das diese Produkte bei sehr hohen Molmassen im Wesentlichen frei von dihydroxyfunktionellen Polyalkylenglykol Verunreinigungen herstellbar sind.

Polyalkylenglykole werden im Allgemeinen durch anionische, ringöffnende Polymerisation von Epoxiden (Ethylenoxid, Propylenoxid, Butylenoxid) mit Alkoholen als Initiatoren gemäß folgender Reaktionsgleichung hergestellt (siehe Encylopedia of Polymer Science and Engineering, Wiley + Sons, Vol. 2, S.1). Als reaktive Spezies fungiert dabei ein Alkoholat-Anion, das durch Umsetzung des Initiatoralkohols mit Basen entsteht. Mit R'-OH = Methanol und Natriumhydroxid als basischer Katalysator entstehen so z.B. α-Methoxy-Ω-hydroxy-Polyalkylenglykole:

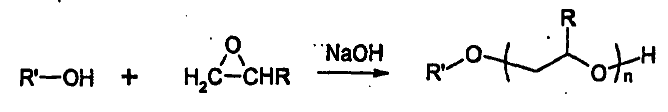

Hochmolekulare α-Alkoxy-Ω-hydroxy-Polyalkylenglykole mit kurzen α-Alkoxygruppen (C₁-C₄ bevorzugt C₁, das heißt R'-OH = Methanol) werden in großem Ausmaß zur Herstellung von Polyalkylenglykol basierten Dispergiermitteln und Fließverbesserern eingesetzt. Dabei wird aus den Ω-Alkoxy-Ω-hydroxy-Polyalkylenglykolen im ersten Schritt durch Veresterung mit einer ungesättigten Carbonsäure, wie z.B. Methacrylsäure ein copolymerisierbares Makromonomer hergestellt, das im weiteren mit einer Vielzahl möglicher Monomeren zum resultierenden polymeren Dispergiermittel/Fließverbesserer copolymerisiert wird (WO-00/012 577 und EP-A-0 884 290).

Problematisch bei der Verwendung von α-Alkoxy-Ω-hydroxy-Polyalkylenglykolen zur Herstellung von polymeren Dispergiermitteln erweist sich ihr Gehalt an verunreinigenden α-Ω-di-hydroxy-Polyalkylenglykolen, die gemäß folgender Gleichung als Nebenreaktion bei der Herstellung von α-Alkoxy-Ω-hydroxy-Polyalkylenglykole nach Gleichung 1 entstehen (J.M. Harris, Polyethylene Glycol Chemistry, Plenum Press, S. 2), da diese α-Ω-di-hydroxy-Polyalkylenglykole bei der Veresterung mit ungesättigten Carbonsäuren vernetzend wirkende Diester bilden:

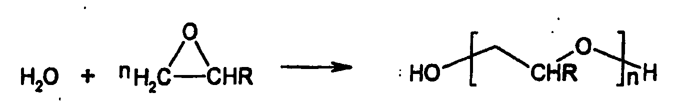

Ebenso dienen α-Alkoxy-Ω-hydroxy-Polyalkylenglykole als Reagentien zur so genannten PEG-ylierung von Proteinpharmazeutika, um deren Halbwertszeit im Serum zu erhöhen oder die Immunreaktion zu unterdrücken (Veronese et.al. S.127 ff in J.M. Harris, Polyethylene Glycol Chemistry, Plenum Press, 1992). Hierzu werden α-Alkoxy-Ω-hydroxy-Polyalkylenglykole durch reaktive Gruppen aktiviert und an Proteine gekoppelt. Auch hier stören die gemäß Gleichung 2 gebildeten α-Ω-di-hydroxy-Polyalkylenglykole, da sie bei der Aktivierungsreaktion α-Ω-di-aktivierte Polyalkylenglykole bilden, die zu einer Vernetzung und Unlöslichkeit der PEG-ylierten Proteine führen US 1992-936416).

Analytisch lassen sich die als Verunreinigung gebildeten α-Ω-di-hydroxy-Polyalkylenglykole deswegen nachweisen, da ihre Molmasse deutlich höher als die der α-Alkoxy-Ω-hydroxy-Polyalkylenglykole ist. Dies ist dadurch bedingt, dass bei der anionischen Polymerisation der Epoxide jede reaktive OH-Gruppe mit gleicher Reaktionsgeschwindigkeit wächst. Der Aufbau der Molmasse erfolgt deshalb für α-Ω-di-hydroxy-Polyalkylenglykole aufgrund der 2 reaktiven OH-Endgruppen doppelt so schnell wie bei den α-Alkoxy-Ω-hydroxy-Polyalkylenglykole, die nur eine reaktive Endgruppe aufweisen. Demzufolge lassen sich Verunreinigungen von α-Ω-di-hydroxy-Polyalkylenglykolen in α-Alkoxy-Ω-hydroxy-Polyalkylenglykole mittels GPC-Analyse anhand der Flächenverhältnisse der Peaks der hochmolekularen Verunreinigung und der Peaks der α-Alkoxy-Ω-hydroxy-Polyalkylenglykole bestimmen. Analysen von kommerziell verfügbaren α-Methoxy-Ω-hydroxy-Polyalkylenglykolen mittels GPC (Selisko, Delgado, Fisher in Journal of Chromatography 641, 1993, 71-79) haben bis zu 22,9 % α-Ω-di-hydroxy-Polyalkylenglykol mit Molmasse 9280 in einem α-Methoxy-Ω-hydroxy-Polyalkylenglykol mit Molmasse 5970 g/mol ermittelt.

Üblicherweise werden α-Alkoxy-Ω-hydroxy-Polyalkylenglykote mit kurzen α-Alkoxygruppen (C₁-C₄-Alkoxy) durch basisch katalysierte Alkoxylierung eines als Initiatoralkohols (R'-OH) verwendeten C₁-C₄-Alkohols wie z.B. Methanol oder Ethanol mit niedrigem Dampfdruck und niedrigem Siedepunkt hergestellt. Als basischer Katalysator werden dabei Alkali- oder Erdalkalihydroxide (MOH) eingesetzt (EP 0884290 A2), die aus dem zu alkoxylierten Alkohol gemäß folgender Gleichung das entsprechende Alkoholat bilden:

MOH + R'OH → R'O⁻ M⁺ + H₂O

Leider entsteht dabei als Nebenprodukt Wasser, das bei der Reaktion mit den Epoxiden die unerwünschten Verunreinigungen, α-Ω-di-hydroxy-Polyalkylenglykole, bildet. Aufgrund des niedrigen Siedepunkts der als R'-OH verwendeten C₁-C₄ Alkohole ist es nicht ohne weiteres möglich, das gebildete Wasser vor Dosierung des Epoxids durch Destillation zu entfernen. Auch die Verwendung von Alkalimetallalkoholat wie z.B. Natriummethanolat (DE-A-3 121 929) als basischer Katalysator löst die Problematik nur unbefriedigend, da das Alkalimetallmethylat aufgrund des Herstellprozesses und der hohen Hygroskopizität nie vollständig frei von Alkalihydroxid ist, das wieder gemäß obiger Gleichung Wasser im Reaktionssystem bildet.

Aus diesem Grund war es deshalb Aufgabe der vorliegende Erfindung α-alkoxy-Ωhydroxy-Polyalkylenglykole mit kurzen α-Alkoxygruppen und Molmassen von 1000 - 5000 g/mol herzustellen, die weitgehend frei von α-Ω-di-hydroxy-Polyalkylenglykolen sind und die vorgenannten Nachteile nicht aufweisen.

Gegenstand der Erfindung ist ein Verfahren zur Herstellung von Verbindungen der Formel 1

R₂-(O-CH₂-CHR)ₙ-OH (1)

durch Umsetzung von Verbindungen der Formel 2

R₂-(O-CH₂-CHR)ₖ-OH (2)

worin
- R₂: einen Alkylrest mit 1 bis 4 C Atomen,
- k: eine Zahl von 1 bis 10,
- R: H, CH₃ oder ein Alkylrest mit 2 bis 4 C Atomen, und
- N: eine Zahl von 200 bis 800 bedeuten,
indem man in Abwesenheit eines polaren, aprotischen Lösemittels zur Verbindung der Formel 2 einen basischen Katalysator zugibt, dem so erhaltenen Gemisch das Wasser entzieht und das Gemisch alkoxyliert.

Wesentlich ist, dass der Initiatoralkohol gemäß Formel 2 einen höheren Siedepunkt/ niedrigeren Dampfdruck wie Wasser aufweist, so dass nach der Umsetzung des Alkohols vor Zugabe des Epoxids eine vollständige destillative Wasserentfernung/Trocknung möglich ist. Bei Verwendung der erfindungsgemäßen Initiatoralkohole ist der Wassergehalt im basischen Katalysator unerheblich. Ebenso ist es unwichtig, ob basischer Katalysator ein Alkalimetallalkoholat oder ein Alkalimetallhydroxid eingesetzt wird, da es möglich ist vor Zugabe des Epoxids Wasser destillativ aus dem Reaktionsmedium zu entfernen. Der erfindungsgemäße Initiatoralkohol gemäß Formel 2 soll nur geringe Anteile an di- oder polyhydroxyfunktionellen Verunreinigungen aufweisen. Als geringer Anteil gilt ein Anteil von 500 ppm.

Vorzugsweise beruht das erfindungsgemäße Verfahren auf folgenden Schritten:
1. Der Initiatoralkohol gemäß Formel 1 wird im Alkoxylierungsreaktor vorgelegt
2. Der basische Katalysator wird zugegeben
3. Das Initiatoralkohol/Basen-Gemisch wird im Vakuum bei erhöhter Temperatur bis zu möglichst niedrigen Wassergehalten getrocknet; bevorzugt beträgt der Wasseranteil unter 500 ppm
4. Das Epoxid, bevorzugt ist Ethylenoxid, das einen niedrigen Wassergehalt von vorzugsweise höchstens 50 ppm haben soll, wird in der zur Erreichung der vorgegebenen Molmasse notwendigen Menge unter Kühlung des Reaktionsgemisches zudosiert, so dass die vorgegebene Reaktionstemperatur von 140°C eingehalten wird.
5. Das entstandene α-alkoxy-Ω-hydroxy-Polyalkylenglykol wird mit einer Säure neutralisiert und die Molmasse sowie der Gehalt an α-Ω-di-hydroxy-Polyalkylenglykolen mittels GPC Analytik bestimmt.

Folgende Beispiele Verdeutlichen die Erfindung näher.

### Beispiel 1

180 g Diethylenglykolmonomethylether (1,5 mol), das durch Destillation sorgfältig gereinigt war und weniger als 0,01 Gew.-% Verunreinigungen aufwies, wurde in einem Druckreaktor vorgelegt. Nach Zugabe von 1 g NaOH wurde bei 90°C unter Vakuum solange getrocknet bis ein Wassergehalt von 0,01 Gew.-% erreicht war. Anschließend wurde bei einer Temperatur von 130°C und einem Druck von ca. 9 bar 4320 g (98,2 mol) bis zu einer rechnerischen Molmasse von 3000 g/mol Ethylenoxid mit einem Wassergehalt von 40 ppm zudosiert. Die Reaktion wurde durch Zugabe von Essigsäure abgestoppt und das Produkt mittels GPC analysiert. Der Hauptpeak 1, der α-methoxy -Ω-hydroxy-Polyethylenglykol zugeordnet werden kann, lag bei einer Molmasse von 2970 g/mol. Daneben konnte ein Peak 2 im Molmassenbereich 5000-7000 g/mol detektiert werden, der α-Ω-di-hydroxy-Polyethylenglykol zugeordnet wurde. Das Peakflächenverhältnis liegt bei Peak 1/Peak 2 = 100/1,3

### Beispiel 2

55,54 g Diethylenglykolmonomethylether (0,463 mol), das durch Destillation sorgfältig gereinigt war und weniger als 0,01 Gew.-% Verunreinigungen aufwies, wurde in einem Druckreaktor vorgelegt. Nach Zugabe von 0,704 g Natriummethanolat wurde bei 80°C unter Vakuum solange getrocknet bis ein Wassergehalt von 0,01 Gew.-% erreicht war. Anschließend wurde bei einer Temperatur von 140°C und einem Druck von ca. 9 bar 2486 g (56,5 mol) bis zu einer rechnerischen Molmasse von 5490 g/mol Ethylenoxid mit einem Wassergehalt von 40 ppm zudosiert. Die Reaktion wurde durch Zugabe von Essigsäure abgestoppt und das Produkt mittels GPC analysiert. Der Hauptpeak 1, der α-methoxy -Ω-hydroxy-Polyethylenglykol zugeordnet werden kann, lag bei einer Molmasse von 5290 g/mol. Daneben konnte ein Peak 2 im Molmassenbereich 9000-12000 g/mol detektiert werden, der α-Ω-di-hydroxy-Polyethylenglykol zugeordnet wurde. Das Peakflächenverhältnis liegt bei Peak 1/Peak 2 = 100/1,4

### Vergleichsbeispiel 1 (gemäß EP 0 884 290)

32 g Methanol (1 mol), das durch Destillation sorgfältig gereinigt war und weniger als 0,02 Gew.-% Verunreinigungen aufwies, wurde in einem Druckreaktor vorgelegt. Nach Zugabe von 3,3 g NaOH wurde direkt bei einer Temperatur von 80 bis 150°C und einem Druck von ca. 9 bar 4968 g (56,5 mol) bis zu einer rechnerischen Molmasse von 5000 g/mol Ethylenoxid mit einem Wassergehalt von 40 ppm zudosiert. Eine Trocknung des Methanol/NaOH-Gemisches war aufgrund des niedrigen Siedpunkts von Methanol hier nicht möglich. Die Reaktion wurde durch Zugabe von Essigsäure abgestoppt und das Produkt mittels GPC analysiert. Der Hauptpeak 1, der α-methoxy -Ω-hydroxy-Polyethylenglykol zugeordnet werden kann, lag bei einer Molmasse von 4020 g/mol. Daneben konnte ein Peak 2 im Molmassenbereich 7000-9000 g/mol detektiert werden, der α-Ω-di-hydroxy-Polyethylenglykol zugeordnet wurde. Das Peakflächenverhältnis liegt bei Peak 1/Peak 2 = 100/15.

## Patentansprüche

1. Verfahren zur Herstellung von Verbindungen der Formel 1
R₂-(O-CH₂-CHR)ₙ-OH (1)
durch Umsetzung von Verbindungen der Formel 2
R₂-(O-CH₂-CHR)ₖ-OH (2)
worin
R₂ einen Alkylrest mit 1 bis 4 C Atomen,
k eine Zahl von 1 bis 10,
R H, CH₃ oder ein Alkylrest mit 2 bis 4 C Atomen, und
n eine Zahl von 200 bis 800 bedeuten,
indem man in Abwesenheit eines polaren, aprotischen Lösemittels zur Verbindung der Formel 2 einen basischen Katalysator zugibt, dem so erhaltenen Gemisch das Wasser entzieht und das Gemisch alkoxyliert.

2. Verfahren nach Anspruch 1, worin der Siedepunkt des Initiatoralkohols R₂-(OCH₂-CHR)ₖ-OH größer ist als der Siedepunkt von Wasser

3. Verfahren nach Anspruch 1 und/oder 2, worin der Initiatoralkohol weniger als 500 ppm an di- oder polyhydroxyfunktionellen Verbindungen enthält.

4. Verfahren nach einem oder mehreren der Ansprüche 1 bis 3, worin als Initiatoralkohol CH₃(OCH₂CH₂)ₖOH eingesetzt wird.

5. Verfahren nach einem oder mehreren der Ansprüche 1 bis 4, worin vor der Zugabe der Epoxidkomponente das Gemisch aus Initiatoralkohol und basischem Katalysator auf Wassergehalte von kleiner 500 ppm destillativ getrocknet wird.

6. Verfahren nach einem oder mehreren der Ansprüche 1 bis 5, worin die zur Trocknung verwendeten Temperatur- und Druckbedingungen so gewählt werden, dass der verwendete Initiatoralkohol noch nicht siedet, Wasser jedoch abdestilliert.

7. Verfahren nach einem oder mehreren der Ansprüche 1 bis 6, worin das zugegebene Epoxid einen Wassergehalt von kleiner als 50 ppm aufweist.

8. Verfahren nach einem oder mehreren der Ansprüche 1 bis 7, worin das zugegebene Epoxid Ethylenoxid ist.

## Claims

1. A process for preparing compounds of the formula 1
R₂-(O-CH₂-CHR)ₙ-OH (1)
by reacting compounds of the formula 2
R₂-(O-CH₂-CHR)ₖ-OH (2)
in which
R₂ is an alkyl radical having from 1 to 4 carbon atoms,
k is from 1 to 10,
R is H, CH₃ or an alkyl radical having from 2 to 4 carbon atoms and
n is from 200 to 800,
by adding a basic catalyst to the compound of the formula 2 in the absence of a polar, aprotic solvent, removing the water from the mixture thus obtained and alkoxylating the mixture.

2. The process as claimed in claim 1, in which the boiling point of the initiator alcohol R₂-(OCH₂-CHR)ₖ-OH is greater than the boiling point of water.

3. The process as claimed in claim 1 and/or 2, in which the initiator alcohol contains less than 500 ppm of di- or polyhydroxy-functional compounds.

4. The process as claimed in one or more of claims 1 to 3, in which the initiator alcohol used is CH₃(OCH₂CH₂)ₖOH.

5. The process as claimed in one or more of claims 1 to 4, in which the mixture of initiator alcohol and basic catalyst is dried by distillation to water contents of less than 500 ppm before the epoxide component is added.

6. The process as claimed in one or more of claims 1 to 5, in which the temperature and pressure conditions used for drying are selected such that the initiator alcohol used does not yet boil but water distils off.

7. The process as claimed in one or more of claims 1 to 6, in which the epoxide added has a water content of less than 50 ppm.

8. The process as claimed in one or more of claims 1 to 7, in which the epoxide added is ethylene oxide.

## Revendications

1. Procédé de préparation de composés de la formule 1 :
R₂-(O-CH₂-CHR)ₙ-OH (1)
par réaction de composés de la formule 2 :
R₂-(O-CH₂-CHR)ₖ-OH (2)
où
R₂ est un reste alkyle ayant 1 à 4 atomes C,
k est un nombre allant de 1 à 10,
R représente H, CH₃ ou un reste alkyle ayant 2 à 4 atomes C, et
n représente un nombre allant de 200 à 800,
en ce que l'on ajoute au composé de la formule (2) un catalyseur basique en l'absence d'un solvant polaire aprotique, on extrait l'eau du mélange ainsi obtenu et on alcoxyle le mélange.

2. Procédé selon la revendication 1, où le point d'ébullition de l'alcool initiateur R₂-(OCH₂CHR)ₖ-OH est supérieur au point d'ébullition de l'eau.

3. Procédé selon la revendication 1 et/ou 2, où l'alcool initiateur contient moins de 500 ppm de composés di- ou polyhydroxyfonctionnels.

4. Procédé selon l'une ou plusieurs des revendications 1 à 3, où l'on met en oeuvre comme alcool initiateur, CH₃(OCH₂CH₂)ₖOH.

5. Procédé selon l'une ou plusieurs des revendications 1 à 4, où avant l'addition du composant époxyde, le mélange de l'alcool initiateur et du catalyseur basique est séché par distillation jusqu'à une teneur en eau inférieure à 500 ppm.

6. Procédé selon l'une ou plusieurs des revendications 1 à 5, où les conditions de température et de pression utilisées pour le séchage sont choisies de sorte que l'alcool initiateur ne bout pas, mais que l'eau distille.

7. Procédé selon l'une ou plusieurs des revendications 1 à 6, où l'époxyde ajouté présente une teneur en eau inférieure à 50 ppm.

8. Procédé selon l'une ou plusieurs des revendications 1 à 7, où l'époxyde ajouté est l'oxyde d'éthylène.
